# EUROPEAN PATENT SPECIFICATION

(11) **EP 3 154 790 B1**
(45) Date of publication and mention of the grant of the patent: **01.11.2017**
(21) Application number: 15747237.4
(22) Date of filing: 15.06.2015
(51) Int. Cl.: B41M 1/28, B41M 5/00, B41M 5/382

(54) **DECORATED CAST ARTICLE OR DECORATED FORGED ARTICLE, AND METHOD FOR DECORATING CAST OR FORGED ARTICLE**
DEKORIERTES GUSSTEIL ODER DEKORIERTES SCHMIEDETEIL, UND VERFAHREN ZUM DEKORIEREN EINES GUSSTEILS ODER EINES SCHMIEDTEILS
ARTICLE MOULÉ DÉCORÉ OU ARTICLE FORGÉ DÉCORÉ, ET PROCÉDÉ POUR LA DÉCORATION D'UN ARTICLE MOULÉ OU D'UN ARTICLE FORGÉ

(30) Priority: 16.06.2014 JP 2014123694; 16.06.2014 JP 2014123695; 10.10.2014 JP 2014208607
(43) Date of publication of application: 19.04.2017
(73) Proprietor: Yamaha Hatsudoki Kabushiki Kaisha, Iwata-shi, Shizuoka 438-8501 (JP)
(72) Inventor: OISHI, Takeshi, Iwata-shi Shizuoka 438-8501 (JP)
(74) Representative: Stöckeler, Ferdinand
(86) International application number: PCT/JP2015/068110
(87) International publication number: WO 2015/194679

(56) References cited:
- JP-A- 2000 280 704
- JP-A- 2002 322 696

## Description

### [Technical Field]

The present invention relates to a decorated cast article or a decorated forged article manufactured by decorating a cast article or a forged article, and a method for decoration.

### [Background]

The surface of a cast article is typically rough due to casting or cutting for dimension correction. The surface of a forged article is also rough due to shot blast working or cutting for dimension correction. When the surface of the cast article or the forged article is rough in this way, it is difficult to decorate the surface of the cast article or the forged article. For example, when decoration is performed by printing, it is impossible to evenly apply ink to concavities on the surface.

For example, Patent Literature 1 discloses a technology for solving this problem and providing, on the surface of a cast article or a forged article, a decoration with improved design, adhesiveness, and abrasion resistance. According to Patent Literature 1, the surface of a water faucet member, which is a cast article, is decorated by printing. To be more specific, after the surface of the cast article is polished, a mark is printed by screen printing, and then a nickel chromium plating is conducted.

### [Citation List]

### [Patent Literature]

[Patent Literature 1] Japanese Unexamined Patent Publication No. 2002-322696

### [Summary of the Invention]

### [Technical Problems]

In Patent Literature 1, the surface roughness on the surface of the cast article is smoothed out by polishing. This improves the adhesiveness between a printed ink layer and the surface of the cast article. However, the polishing requires additional work for smoothing the surface of the cast article to the extent of achieving a sufficient adhesiveness of the ink layer. For this reason, while the decoration improved in design, adhesiveness, and abrasion resistance is provided on the surface of the cast article, the productivity is deteriorated due to the polishing. Furthermore, the polishing may be difficult to be done depending on the shape of the cast article. In such a case, the degree of freedom in decoration is not high because, for example, the areas that a decoration are limited.

An object of the present invention is therefore to provide a decorated cast or forged article and a method for decorating a cast or forged article which is good in productivity and the degree of freedom in decoration, and allows providing the decoration with improved adhesiveness and abrasion resistance.

### [[Technical Solution and Advantageous Effect of Invention]

A decorated cast article or a decorated forged article includes: a coating layer which coats a metal top surface of a cast article or a forged article, is in contact with a bottom surface of a printed ink layer which includes pigment, and has a top surface which is larger in area than a top surface of the printed ink layer, wherein, in the coating layer, at least a top surface of the coating layer is formed by spraying, and the thickness of at least a part of the printed ink layer including the pigment is smaller than the maximum thickness of a part in contact with the ink later of the coating layer, and the ink layer is directly printed on the top surface of the coating layer and decorates the cast article or the forged article (1).

A method for decorating a cast article or a forged article includes: coating a metal top surface of the cast or forged article by a coating layer, and directly printing an ink layer including a pigment on the top surface of the coating layer, wherein, at least a top surface of the coating layer is formed by spraying, and wherein the ink layer is printed such that the top surface of the coating layer is larger in area than a top surface of the ink layer, and that the thickness of at least a part of the ink layer is smaller than the maximum thickness of a part in contact with the ink layer of the coating layer.

The surface of a cast article or a forged article is rough due to casting or machining. If printing is directly conducted on such a rough surface, it is impossible to evenly apply ink to concavities on the surface.

In the present invention, the coating layer is provided to coat the surface of the cast article or the forged article. The coating layer is in contact with the bottom surface of the printed ink layer which includes the pigment. Because the coating layer is formed on the rough surface of the cast article or the forged article, the contact area between the surface of the cast article or the forged article and the coating layer is enlarged, and hence the adhesiveness between the surface of the cast article or the forged article and the coating layer is improved. The coating layer is formed also in the concavities in the surface of the cast article or the forged article, and the top surface of the coating layer is formed by spraying. For this reason, the degree of a surface roughness of th coating layer is low. It is therefore possible to attain the adhesivenes respect to the top surface of the coating layer. Furthermore, in the spraying, paint is sprayed in the form of particles such as fine liquid droplets. Fine particle-shaped convexities are formed on the top surface of the coating layer formed by the spraying. In addition to the above, the printed ink layer including the pigment is directly printed on the top surface of the coating layer. For example, in forme-based printing, ink (image) on a transfer substrate is transferred from the transfer substrate to a printing target. As such, when ink is transferred from a forme to the surface of a printing target in forme-based printing, ink is typically pressed onto the printing target. When an ink layer is formed by formeless printing, ink is also pressed onto a printing target. For this reason, the printed ink layer including the pigment is pressed onto the surface of the coating layer having the fine convexities. In this way, the contact area between the coating layer and the ink layer is enlarged, and hence the adhesiveness between the coating layer and the ink layer is further improved. As a result, the adhesiveness of the printed ink layer including the pigment with respect to the cast article or the forged article is improved by providing the coating layer which is in contact with both the metal top surface of the cast article or the forged article and the bottom surface of the ink layer.

The top surface of the printed ink layer including the pigment is formed to be smaller in area than the top surface of the coating layer. For this reason, the ink layer tends to receive a shear force or a force in a crosswise direction. The thickness of the ink layer, however, is at least a part smaller than the maximum thickness of a part in contact with the ink layer of the coating layer. For this reason, when the surface of the decorated cast article or the decorated forging article is rubbed by an object, the object is less likely to be caught at an edge (side surface) of the ink layer. Furthermore, because the adhesiveness between the coating layer and the ink layer is improved and hence the ink layer is further less likely to be peeled off, the abrasion resistance of the printed ink layer including the pigment is further improved.

As described above, because the coating layer is provided to be in contact with both the metal top surface of the cast article or the forged article and the bottom surface of the ink layer and the relationship between the coating layer and the ink layer is suitably modified, the adhesiveness of the ink layer is improved. Furthermore, the coating layer is easily formed by coating, irrespective of the shape of the cast article or the forged article. This makes it possible to avoid the polishing of the surface of the cast article or the forged article for obtaining the smoothness sufficient for attaining the adhesiveness of the ink layer, and hence the productivity is improved.

In addition to the above, the top surface of the coating layer is area than the top surface of the printed ink layer including the pigme coating layer is easily formed by coating, irrespective of the shape of the cast article or the forged article. The printed ink layer including the pigment is therefore easily formed irrespective of the shape of the cast article or the forged article, and hence the degree of freedom in decoration is high.

For the reasons above, the decorated cast article or the decorated forged article which is decorated by the ink layer of the present invention is good in productivity and excels in the degree of freedom in decoration, adhesiveness, and abrasion resistance.

In the decorated cast article or the decorated forged article of the present invention, preferably the thickness of the printed ink layer which includes the pigment is smaller than the maximum thickness of the part in contact with the ink layer of the coating layer. Furthermore, in the method for decorating a cast article or a forged article, preferably the ink layer is printed such that the thickness of the ink layer is smaller than the maximum thickness of the part in contact with the ink layer of the coating layer. With this arrangement, when the surface of the decorated cast article or the decorated forging article is rubbed by an object, the object is less likely to be caught at an edge (side surface) of the ink layer. Therefore the abrasion resistance of the printed ink layer including the pigment is further improved.

In the decorated cast article or the decorated forged article of the present invention, preferably the printed ink layer including the pigment includes: a first ink layer which is a single-layer structure and which has a bottom surface in contact with the top surface formed by spraying of the coating layer; and a second ink layer which is a single-layer structure and which has a bottom surface is in contact with at least a part of a top surface of the first ink layer.

According to this arrangement, the ink layer includes the first ink layer having the bottom surface which is in contact with the top surface of the coating layer which surface formed by spraying and the second ink layer having the bottom surface which is in contact with the top surface of the first ink layer. The first ink layer and the second ink layer are formed as follows. There are two methods, i.e., a first method in which the second ink layer is formed by printing after the first ink layer is printed on the top surface of the coating layer, and a second method in which, after the first ink layer and the second ink layer are laminated, the laminated first and second ink layers are transferred to or printed on the top surface of the coating layer. In a specific example of the second me pad (forme) of pad printing is pressed onto an intaglio to which ink has the first ink layer is transferred to the pad, and then the pad is pressed onto the intaglio to which ink has newly been applied, so that the first ink layer and the second ink layer are laminated on the surface of the pad. Thereafter, the pad is pressed onto the top surface of the coating layer, thereby directly printing the ink layer on the top surface of the coating layer.

During printing, the ink applied forms dots (or a mesh). For this reason, when the ink layer has a single-layer structure formed by performing the printing only once, the top surface of the ink layer is rough.

In the present invention the ink layer includes the first ink layer and the second ink layer. In both of the first and second methods above, the second ink layer including ink dots is pressed onto the top surface of the first ink layer including ink dots. The ink in the second ink layer therefore enters in the concavities on the top surface of the first ink layer. Furthermore, as the ink in the second ink layer enters the concavities in the first ink layer, the thickness of parts of the second ink layer which are formed on the convexities in the first ink layer is reduced. For this reason, the degree of a surface roughness of the top surface of the second ink layer is smaller than the degree of a surface roughness of the top surface of the first ink layer when only the first ink layer is printed. The degree of the surface roughness of the top surface of the ink layer is therefore small as compared to the case where the ink layer has a single-layer structure. The abrasion resistance of the ink layer is therefore further improved.

According to the first method, printing is conducted twice for the top surface of the coating layer on which fine convexities are formed by spraying. In other words, in the first method, the first ink layer is pressed twice onto the coating layer. Therefore, as compared to the case where the ink layer has a single-layer structure, the contact area between the coating layer and the ink layer is further enlarged and the adhesiveness between the coating layer and the ink layer is further improved.

According to the second method, while the pressing of the first ink layer onto the coating layer is conducted once, the thickness of the layer pressed once is larger than the thickness when the ink layer has a single-layer structure, because the laminated first ink layer and the second ink layer is pressed. For this reason, while the pressing is conducted once, ink particles are easily movable due to the large thickness. For this reason, the contact area between the coating layer and the ink layer is further enlarged as compared to the case where the ink layer has a single-layer structure, with the result that the adhesiveness between the coating layer and the ink layer is further improved.

As such, the contact area between the coating layer and the and the adhesiveness between the coating layer and the ink layer is matter whether the first method or the second method is employed to form the first ink layer and the second ink layer.

Furthermore, in both of the first and second methods above, the second ink layer including ink dots is pressed onto the top surface of the first ink layer including ink dots. For this reason, the contact area between the first ink layer and the second ink layer is further enlarged and the adhesiveness between the first ink layer and the second ink layer is improved. The adhesiveness between the coating layer and the ink layer is therefore further improved.

In the decorated cast article or the decorated forged article of the present invention, preferably the ink layer including the pigment includes the first ink layer, the second ink layer, and one or more third ink layers, each of the third layers being a single-layer structure and laminated on at least a part of a top surface of the second ink layer.

According to this arrangement, the ink layer includes the first ink layer having the bottom surface which is in contact with the top surface of the coating layer which is formed by spraying, the second ink layer having the bottom surface which is in contact with the top surface of the first ink layer, and the one or more third ink layers which are laminated on at least a part of the top surface of the second ink layer.

Among the one or more third ink layers, a third ink layer in contact with the second ink layer can be formed by one of a third, fourth, or fifth method. In the third method, a third ink layer is printed on the top surface of the second ink layer formed by the first or second method mentioned above. In the fourth method, the second ink layer is laminated on a third ink layer and the laminated second and third ink layers are printed on the top surface of the first ink layer which is printed on the top surface of the coating layer. In the fifth method, the first, second, and third layers are laminated and printed on the top surface of the coating layer. In the fourth method, the first ink layer and the second ink layer are formed by the first method mentioned above. In the fifth method, the first ink layer and the second ink layer are formed by the second method mentioned above.

No matter whether the third ink layer is formed by the third, fourth, or fifth method, the third ink layer including ink dots is pressed onto the top surface of the second ink layer.,. For this reason, the degree of the surface roughness of the top surface of the third ink layer is reduced as compared to the top surface of the second ink layer when only the first ink layer and the second ink layer are printed. The degree of the surface roughness of the top surface of the ink layer is therefore reduced as compared to the case has a two-layer structure. This further improves the abrasion resistanc

When the third ink layer is formed by the third method, the first ink layer has been pressed three times onto the top surface of the coating layer on which surface fine convexities are formed. In other words, the first ink layer was subjected to pressing three times. When compared to the case where the ink layer has a two-layer structure, the contact area between the coating layer and the ink layer is further enlarged and the adhesiveness between the coating layer and the ink layer is further improved.

When the third ink layer is formed by the fourth method, the first ink layer has been pressed twice onto the coating layer. Therefore, as compared to the case where the ink layer has a single-layer structure, the contact area between the coating layer and the ink layer is further enlarged and the adhesiveness between the coating layer and the ink layer is further improved.

When the third ink layer is formed by the fifth method, the first ink layer has been pressed onto the coating layer once. However, because the laminated first, second and third layers are pressed, the thickness of the pressed layer is larger than the thickness in the case where the ink layer has a two-layer structure. For this reason, while the pressing is conducted once, ink particles are easily movable due to the large thickness. For this reason, the contact area between the coating layer and the ink layer is further enlarged as compared to the case where the ink layer has a two-layer structure and is formed by the second method mentioned above, with the result that the adhesiveness between the coating layer and the ink layer is further improved.

As such, the contact area between the coating layer and the ink layer is enlarged and the adhesiveness between the coating layer and the ink layer is further improved, no matter whether the third, fourth, or fifth method is employed to form the third ink layer.

Furthermore, in all of the third to fifth methods described above, the third ink layer including ink dots is pressed onto the top surface of the second ink layer including ink dots. For this reason, the contact area between the second ink layer and the third ink layer is further enlarged and the adhesiveness between the second ink layer and the third ink layer is improved. The adhesiveness between the coating layer and the ink layer is therefore further improved.

In the decorated cast article or the decorated forged article of the present invention, preferably the printed ink layer including the pigment includes: a fourth ink layer which is a single-layer structure or a multi-layer structure and which has a bottom surface in contact with the top surface formed by spraying of the coating layer; and a fifth ink layer which is a single-layer structure or a multi-layer structure and which has a bott with at least a part of a top surface of the fourth ink layer and the t spraying of the coating layer.

According to this arrangement, the ink layer includes the fourth ink layer and the fifth layer. The fourth ink layer has the bottom surface which is in contact with the top surface of the coating layer which top surface is formed by spraying, whereas the fifth ink layer has the bottom surface which is in contact with at least a part of the top surface of the fourth ink layer and is also in contact with the top surface of the coating layer which top surface is formed by spraying. Assume that the ink layer is formed solely of the fourth and fifth ink layers. In this case, on the top surface of the coating layer which surface is large in area, a thin part formed only of the fifth ink layer is formed, and a thick part in which the fourth and fifth layers are laminated is formed. For this reason, the thickness of the edge of the ink layer (i.e., the height of the side surface) is reduced as compared to the case where the entirety of the bottom surface of the fifth ink layer is formed on the top surface of the fourth ink layer. Therefore when the surface of the decorated cast article or the decorated forged article is rubbed by an object, the object is less likely to be caught at the edge (side surface) of the ink layer. The ink layer becomes further less likely to be peeled off, and hence the abrasion resistance of the ink layer is further improved.

In the decorated cast article or the decorated forged article of the present invention, preferably the printed ink layer including the pigment includes a synthetic resin, and the content of the synthetic resin in a part in contact with the top surface of the coating layer of the fifth ink layer is larger than the content of the synthetic resin in a part in contact with the top surface of the coating layer of the fourth ink layer.

The adhesiveness of ink increases as the content of the synthetic resin therein increases. Assume that the content of the synthetic resin in a part in contact with the top surface of the coating layer of the fifth ink layer is H1, and the content of the synthetic resin in a part in contact with the top surface of the coating layer of the fourth ink layer is H2. In this case, H1 is larger than H2. For this reason, the adhesiveness of the fifth layer which is in contact with the top surface of the fourth ink layer and the top surface of the coating layer is higher than that of the fourth ink layer. For this reason, the adhesiveness between the ink layer and the coating layer is improved as compared to the case where only the fourth ink layer is in contact with the top surface of the coating layer. In this way, the abrasion resistance of the ink layer is further improved.

In the decorated cast article or the decorated forged article of t preferably the average thickness of the printed ink layer including the pigment is larger than 1/10 of the average thickness of a part in contact with the ink layer of the coating layer. This prevents the ink layer from being peeled off due to excessive thinness, and further improves the adhesiveness between the ink layer and the coating layer.

In the decorated cast article or the decorated forged article of the present invention, preferably the printed ink layer including the pigment is formed by at least one of screen printing, pad printing, and inkjet printing. Furthermore, in the method for decorating a cast article or a forged article, preferably the printed ink layer including the pigment is formed by at least one of screen printing, pad printing, and inkjet printing. This makes it possible to easily form the ink layer with high decoration precision, irrespective of the shape of the cast article or the forged article. The degree of freedom in the decoration is therefore improved.

In the decorated cast article or the decorated forged article of the present invention, preferably at least a part of the coating layer formed by coating is formed by at least one of electrodeposition coating, powder coating, and electrostatic coating. Furthermore, in the method for decorating a cast article or a forged article, preferably at least a part of the coating layer formed by coating is formed by at least one of electrodeposition coating, powder coating, and electrostatic coating. With this arrangement, variations in the thickness of the coating layer are restrained. For this reason, the adhesiveness between the ink layer and the coating layer is further improved.

In the decorated cast article or the decorated forged article of the present invention, preferably the top surface formed by spraying of the coating layer is formed by electrostatic coating. Furthermore, in the method for decorating a cast article or a forged article, preferably the top surface formed by spraying of the coating layer is formed by electrostatic coating. The electrostatic coating excels in appearance. The appearance of the decorated cast article or the decorated forged article is therefore improved.

In the decorated cast article or the decorated forged article of the present invention, preferably the printed ink layer including the pigment includes at least one of acrylic resin and polyurethane resin. With this, the weather resistance of the ink layer is improved while the adhesiveness is maintained.

In the decorated cast article or the decorated forged article of t preferably the printed ink layer including the pigment includes acryli improves the weather resistance of the ink layer.

In the decorated cast article or the decorated forged article of the present invention, preferably the coating layer formed by coating includes at least one of acrylic resin, epoxy resin, and melamine resin. This further improves the adhesiveness between the ink layer and the coating layer.

In the decorated cast article or the decorated forged article of the present invention, preferably the coating layer formed by coating includes acrylic resin. With this arrangement, the weather resistance of the coating layer is improved while the adhesiveness between the ink layer and the coating layer is maintained.

In the decorated cast article or the decorated forged article of the present invention, preferably the degree of a surface roughness of the top surface of the coating layer which surface is formed by spraying is smaller than the degree of a surface roughness of a surface of the cast article or the forged article, the top surface formed by spraying of the coating layer has fine particle-shaped convexities which are arranged with shorter intervals than convexities of the surface roughness of the surface of the cast article or the forged article and which are formed by solidifying sprayed fine particles.

According to this arrangement, the top surface of the coating layer is formed by spraying. For this reason, the degree of a surface roughness of the top surface of the coating layer is low. It is therefore possible to attain the adhesiveness of the ink layer with respect to the top surface of the coating layer. Furthermore, in the spraying, paint is sprayed in the form of particles such as fine liquid droplets. Fine particle-shaped convexities are formed on the top surface of the coating layer formed by the spraying. The ink layer is directly printed on the top surface having the fine convexities of the coating layer. In this way, the contact area between the coating layer and the ink layer is enlarged, and hence the adhesiveness between the coating layer and the ink layer is further improved.

### [Brief Description of the Drawings]

[FIG. 1] FIG. 1 is a schematic cross section of a decorated cast article of an embodiment of the present invention.
[FIG. 2] FIG. 2 shows enlarged photographs of an example of coating layer of FIG. 1.
[FIG. 3] FIG. 3 is a plan view showing a state in which only a first white ink layer is printed on the top surface of the coating layer.
[FIG. 4] FIG. 4A is a cross section taken at the IV-IV line in FIG. 3, whereas FIG. 4B is a cross section showing a state in which only a second white ink layer is printed on the top surface of the first white ink layer.
[FIG. 5] FIG. 5 is a schematic cross section of a decorated cast article of a modified embodiment of the present invention.

### [Preferred Embodiment of Invention]

The following will describe an embodiment of the present invention.

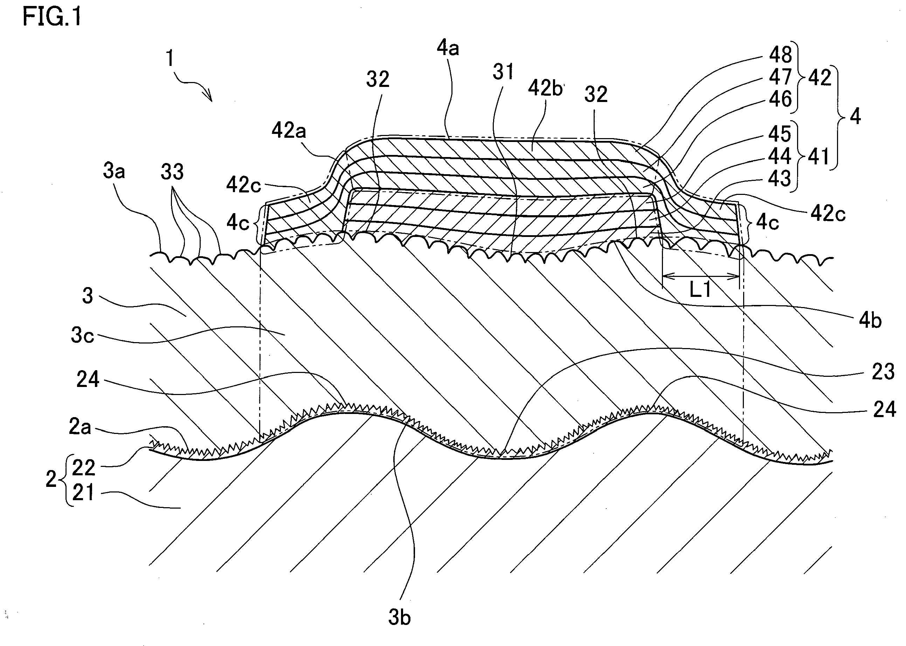

As shown in FIG. 1, a decorated cast article 1 of the present embodiment includes a cast article 2, a coating layer 3 which is in contact with a top surface 2a of the cast article 2, and an ink layer 4 which is in contact with a top surface 3a of the coating layer 3. The ink layer 4 forms a picture which is a text, a line, or the like. In other words, the decorated cast article 1 is decorated with this ink layer 4. Specific examples of the decorated cast article 1 include wheels, body frames, and exterior parts of two-wheeled and four-wheeled vehicles. While in the present embodiment a flat surface of the cast article 2 is decorated, a curved surface of the cast article 2 may be decorated.

### <Structure of Cast Article 2>

The cast article 2 includes a main body 21 and a conversion coating film 22 which is formed on the entire surface of the main body 21. The conversion coating film 22 is formed by conversion coating. For the sake of convenience, the cast article 2 before the conversion coating is termed an untreated cast article. The untreated cast article (cast article 2) is, for example, formed by casting aluminum alloy, magnesium alloy, or the like. Non-limiting examples of the casting method includes die casting, gravity casting, and sand mold casting. When the gravity casting or the sand mold casting is employed, the surface of the untreated cast article immediately after being taken out from the mold is rough for reasons such as solidification shrinkage which occurs in the casting. In the case of die casting, the degree of surface roughness due to the solidification shrinkage is small (gentle) as compared to the gravity casting and the sand mold casting. Irrespective of the casting method, at least a part of the surface of the untreated cast article is cut for dimension correction, after the article is taken out from the mold. For this reason, irrespective of the casting method, a surface roughness with an arithmetic average roughness Ra of about, for example, 0.2 to 5.0µm is formed at least at of the untreated cast article.

Conversion coating is conducted for this untreated cast article by, for example, dipping the untreated cast article into a zirconium conversion coating solution. This causes a chemical reaction on the surface of the untreated cast article, with the result that the conversion coating film 22 is formed. The thickness of the conversion coating film 22 is very small as compared to the depth of each concavity (i.e., the height of each convexity) formed on at least a part of the surface of the untreated cast article. For this reasons, at least at a part of the top surface 2a of the cast article 2 on which the conversion coating film 22 is formed, has a surface roughness (concavities 23 and convexities 24) formed in the same manner as on the surface of the untreated cast article. In the present embodiment, on the top surface 2a of the cast article 2, a decoration is provided in a region where the surface roughness (the concavities 23 and the convexities 24) is formed. The thickness of the conversion coating film 22 is about, for example, 0.1 to 1 µm. Furthermore, due to the conversion coating, the top surface 2a of the cast article 2 (i.e., the surface of the conversion coating film 22) is finely roughened (i.e., processed to be rough).

### <Structure of Coating Layer 3>

The coating layer 3 is in contact with the top surface 2a of the cast article 2. The coating layer 3 may be in contact with the entirety of the top surface 2a of the cast article 2 or may be in contact with a part of the surface 2a of the cast article 2. When the decorated cast article 1 is a wheel, the coating layer 3 is preferably in contact with the entirety of the top surface 2a of the cast article 2.

When the coating layer 3 is in contact with the entirety of the top surface 2a of the cast article 2, the coating layer 3 has only a top surface 3a and a bottom surface 3b. When the coating layer 3 is in contact with a part of the top surface 2a of the cast article 2, the coating layer 3 has a top surface 3a, a side surface, and a bottom surface 3b. The bottom surface 3b of the coating layer 3 is a surface in contact with the top surface 2a of the cast article 2. The top surface 3a of the coating layer 3 is a surface which is not in contact with the top surface 2a of the cast article 2 and opposes the surface 2a of the cast article 2. The side surface of the coating layer 3 is a surface which is not in contact with the top surface 2a of the cast article 2 and defines the thickness of the end portion of the coating layer 3. In the coating layer 3, a continuous plane on the layer is defined as each of these surfaces of the coating layer 3.

The coating layer 3 is formed by coating. For this reason, the contact with not only the convexities 24 of the top surface 2a of the cast article 2 but also the concavities 23. Furthermore, because the coating layer 3 is formed by coating, the top surface 3a of the coating layer 3 is also rough to a lesser extent than the surface roughness (the concavities 23 and the convexities 24) of the top surface 2a of the cast article 2. The average thickness of a part 3c in contact with the ink layer 4 of the coating layer 3 is, for example, 10 to 50µm. In this case, the maximum thickness of that part of the coating layer 3 in contact with the ink layer 4 is, for example, 12 to 60µm. This maximum thickness of the part 3c of the coating layer 3 in contact with the ink layer 4 is, for example, about 20% larger than the average thickness of the part 3c of the coating layer 3 in contact with the ink layer 4. In FIG. 1, the part 3c of the coating layer 3 in contact with the ink layer 4 is surrounded by a two-dot chain line.

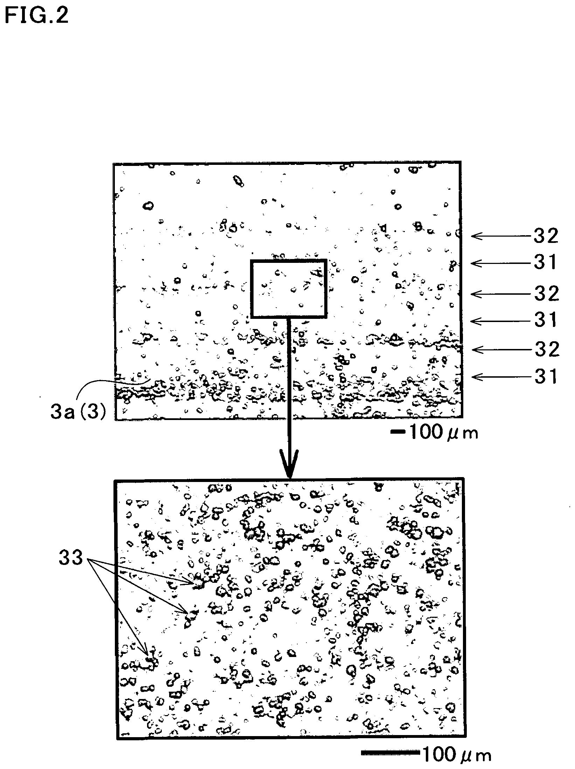

FIG. 2 show microphotographs of an example of the top surface 3a of the coating layer 3. The lower photograph in FIG. 2 is an enlarged photograph of the region framed by the square frame in the upper photograph. As shown in FIG. 2, the surface roughness (concavities 31 and convexities 32) is formed on the top surface 3a of the coating layer 3.

The coating layer 3 may be formed by single coating or may be formed by conducting coating at least twice with identical or different type of paint. When the coating layer 3 is formed by single coating, the coating layer 3 has a single-layer structure. When the coating layer 3 is formed by conducting coating at least twice, the coating layer 3 has a multi-layer structure.

At least the top surface 3a of the coating layer 3 is formed by spraying. Examples of the spraying include electrostatic coating, air spraying, and airless spraying. The air spraying is a method of performing coating without using air in such a way that a paint is sprayed from a spray by applying a high pressure to the paint. The electrostatic coating is a method of performing coating in such a way that, a coating target and an atomized or powder paint are electrified to opposite polarities and the paint is adhered to the coating target by static electricity. The electrostatic coating may be electrostatic powder coating. Furthermore, the electrostatic coating may be air atomizing electrostatic coating or rotation atomizing electrostatic coating. In the case of spraying, paint is sprayed in the form of particles such as fine liquid droplets. For this reason, as shown in FIG. 1 and FIG. 2, minute particle-shaped convexities 33 are formed on the top surface 3a of the coating layer 3. These convexities 33 are formed as the sprayed particles such a are solidified. The convexities 33 cause the top surface 3a of the finely rough. In other words, the particle diameters of the minute particle-shaped convexities 33 depend on the particle diameters of the particles such as fine liquid droplets which can be sprayed in the spraying. The intervals of the convexities 33 are shorter than the intervals of the convexities 32.

When the coating layer 3 is formed by conducting coating at least twice, parts of the coating layer 3 other than the top surface 3a are formed by, for example, electrodeposition coating, powder coating, electrostatic coating, air spraying, or airless spraying. The electrodeposition coating is a method of performing coating in such a way that, a coating target is soaked into a paint, and a coating film is formed by electrifying the coating target and the paint to opposite polarities.

Specific examples of the method of forming the coating layer 3 will be described. For example, the coating layer 3 may be formed in such a way that, after the electrodeposition coating is conducted on the top surface 2a of the cast article 2, the electrostatic coating is conducted. The electrodeposition coating yields a good evenness of the film and the throwing power, whereas the electrostatic coating improves the appearance. The throwing power is a characteristic in which coating films are serially formed on non-coated parts. When a method excels in the throwing power, a coating film is formed even if a coating target has a complicated shape. Between the electrodeposition coating and the electrostatic coating, a base coating may be performed to improve the adhesiveness. Furthermore, for example, the coating layer 3 may be formed in such a way that, after the base coating is conducted on the top surface 2a of the cast article 2, the electrostatic coating is conducted. In other words, the electrodeposition coating may be omitted.

The coating layer 3 is formed of paint such as epoxy paint, acrylic paint, and melamine paint. The epoxy paint is paint in which epoxy resin occupies the largest share among included synthetic resins. The other types of paints are defined in a similar way. The coating layer 3 includes, for example, synthetic resins such as epoxy resin, acrylic resin, and melamine resin. The coating layer 3 includes pigment and an additive such as hardener. In the present embodiment, the coating layer 3 includes dark pigment such as a black pigment. When the coating layer 3 has a multi-layer structure, at least the top-surface-side layer is required to include pigment.

### <Structure of Ink Layer 4>

The ink layer 4 is in contact with a part of the top surface 3a of the coating layer 3. The ink layer 4 has a top surface 4a, a side surface 4c, and a bottom surface 4b. The bottom surface 4b of the ink layer 4 is a surface facing the coating layer 3 side. The side surface 4c of the ink layer 4 defines the thickness of the end portion of the ink layer 4. The top surface 4a of the ink layer 4 is a part of the surface facing the side opposite to the coating layer 3, which part excludes the side surface 4c. When the side surface 4c is orthogonal to the top surface 3a of the coating layer 3, the surface of the ink layer 4 which surface faces the side opposite to the coating layer 3 does not include the side surface 4c. When the side surface 4c is inclined with respect to the top surface 3a of the coating layer 3, the surface of the ink layer 4 which surface faces the side opposite to the coating layer 3 includes the side surface 4c. The top surface, the side surface, and the bottom surface of each of later-described layers, i.e., a white ink layer 41, a color ink layer 42, first to third white ink layers 43 to 45, and first to third color ink layers 46 to 48 are defined in a similar manner.

Because the ink layer 4 is in contact with a part of the top surface 3a of the coating layer 3, the coating layer 3 is structured as below. The coating layer 3 is in contact with the top surface 2a of the cast article 2 and the bottom surface 4b of the ink layer 4, and includes the top surface 3a which is larger in area than the top surface 4a of the ink layer 4. When the decorated cast article 1 is a wheel, the ink layer 4 is, for example, formed at a rim to which a tire is attached.

The thickness of at least a part of the ink layer 4 is smaller than the maximum thickness of the part 3c in contact with the ink layer 4 of the coating layer 3. The thickness of the ink layer 4 is preferably smaller than the maximum thickness of the part 3c in contact with the ink layer 4 of the coating layer 3. The average thickness of the ink layer 4 is preferably larger than 1/10 of the average thickness of the part 3c in contact with the ink layer 4 of the coating layer 3. As described above, the part 3c of the coating layer 3 in contact with the ink layer 4 is, for example, 10 to 50µm in average thickness, and 12 to 60µm in maximum thickness. In this case, the average thickness of the ink layer 4 is, for example, 5 to 25µm. In this case, the maximum thickness of the ink layer 4 is, for example, 7 to 35µm. The maximum thickness of the ink layer 4 is, for example, about 40% larger than the average thickness.

The ink layer 4 is formed by conducting direct printing on the ink layer 4 has a multi-layer structure. The ink layer 4 includes
(equivalent to a fourth ink layer of the present invention) which is white in color and a color ink layer 42 (equivalent to a fifth ink layer of the present invention) which is different from white in color. The white ink layer 41 and the color ink layer 42 are laminated in a direction intersecting with the top surface 3a of the coating layer 3 (in a vertical direction in FIG. 1). The bottom surface of the white ink layer 41 is in contact with a part of the top surface 3a of the coating layer 3. The bottom surface of the color ink layer 42 is in contact with the entire top surface of the white ink layer 41 and the top surface 3a of the coating layer 3. The bottom surface of the color ink layer 42 is preferably in contact with at least a part of the side surface of the white ink layer 41, but may not be in contact with the side surface of the white ink layer 41. The surface of the color ink layer 42 has a step (i.e., has a difference in height) at a border between a part 42b in contact with the top surface of the white ink layer 41 and a part 42c in contact with the top surface 3a of the coating layer 3. The surface of this part of the color ink layer 42 at the border above is termed a stepped surface 42a. The top surface of the color ink layer 42 is larger in area than the top surface of the white ink layer 41. The thickness of the white ink layer 41 may be identical with or different from the thickness of the color ink layer 42. In FIG. 1, the part 42b of the color ink layer 42 in contact with the top surface of the white ink layer 41 and the part 42c of the color ink layer 42 in contact with the top surface 3a of the coating layer 3 are surrounded by two-dot chain lines, respectively.

The white ink layer 41 has a three-layer structure (multi-layer structure). The white ink layer 41 includes a first white ink layer 43 (equivalent to a first ink layer of the present invention), a second white ink layer 44 (which is equivalent to a second ink layer of the present invention), and a third white ink layer 45 (which is equivalent to one of the third ink layers of the present invention). Each of the first to third white ink layers 43 to 45 has a single-layer structure. The first to third white ink layers 43 to 45 are laminated in a direction intersecting with the top surface 3a of the coating layer 3 (in a vertical direction in FIG. 1). The bottom surface of the first white ink layer 43 is in contact with the top surface 3a of the coating layer 3. The bottom surface of the second white ink layer 44 is in contact with the top surface of the first white ink layer 43. The bottom surface of the third white ink layer 45 is in contact with the top surface of the second white ink layer 44. The top surfaces of the first to third white ink layers 43 to 45 are substantially identical with one another in area and shape. The first to third white ink layers 43 to 45 may be identical with one another or different from one another in thickness.

The color ink layer 42 has a three-layer structure (multi-layer ink layer 42 includes a first color ink layer 46, a second color ink layer 47, and a third color ink layer 48. Each of the first to third color ink layers 46 to 48 has a single-layer structure. Each of the first to third color ink layers 46 to 48 is equivalent to one of the third ink layers of the present invention. The first to third color ink layers 46 to 48 are laminated in a direction intersecting with the top surface 3a of the coating layer 3. The bottom surface of the first color ink layer 46 is in contact with the entire top surface of the third white ink layer 45 and the top surface 3a of the coating layer 3. The bottom surface of the second color ink layer 47 is in contact with the top surface of the first color ink layer 46. The bottom surface of the third color ink layer 48 is in contact with the top surface of the second color ink layer 47. The top surfaces of the first to third color ink layers 46 to 48 are substantially identical with one another in area and shape. The first to third white ink layers 43 to 45 may be identical with one another or different from one another in thickness.

The ink layer 4 is formed by, for example, ink such as polyurethane ink, acrylic ink, epoxy ink, and polyester ink. The polyurethane ink is ink in which polyurethane resin occupies the largest share among included synthetic resins. The other types of the inks are defined in a similar way. The ink layer 4 includes, for example, synthetic resins such as polyurethane resin, acrylic resin, epoxy resin, and polyester resin. The ink layer 4 may include, for example, polyurethane resin (urethane-acrylic resin) hardened by reaction of acrylic polyol with an isocyanate compound (hardener).

In addition to the above, the ink layer 4 includes a pigment and an additive such as a hardener. The ink by which the ink layer 4 is formed includes an organic solvent. After the formation by printing, the ink layer 4 is dried by natural drying or forced drying using a fan or the like. As a result of the drying, the hardening reaction of the ink layer 4 advances and the hardness of the ink layer 4 increases, whereas the organic solvent included in the ink layer 4 volatilizes.

The first to third white ink layers 43 to 45 are identical with one another in ingredients and the ratio of the ingredients. The first to third color ink layers 46 to 48 are identical with one another in ingredients and the ratio of the ingredients. The white ink layer 41 includes a white pigment (to be more specific, titanium oxide, for example). The color ink layer 42 includes at least one pigment other than the white pigment. Depending on the color of the color ink layer 42, the color ink layer 42 may include the white pigment. The content (percent by mass) of the pigment in the color ink layer 4 content (percent by mass) of the pigment in the white ink layer 41. content of the synthetic resin in the color ink layer 42 is larger than the content of the synthetic resin in the white ink layer 41.

The ink layer 4 is formed by, for example, forme-based printing such as screen printing and pad printing, or formeless printing such as inkjet printing, electrostatic photocopying, and melting/dye-sublimation heat transfer. The pad printing is a printing technology with which an elastically-deformable pad (forme) is pressed onto an intaglio to which ink has been applied so that the ink is transferred to the pad, and then the pad is pressed onto a printing target to transfer the ink again. The ink layer 4 is formed by conducting printing six times by the same printing method or by different printing methods. Each of the first to third white ink layers 43 to 45 and the first to third color ink layers 46 to 48 is formed by single printing.

Now, a process of forming the ink layer 4 will be described.

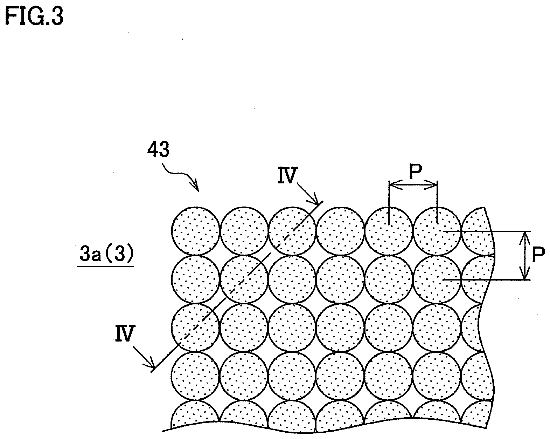

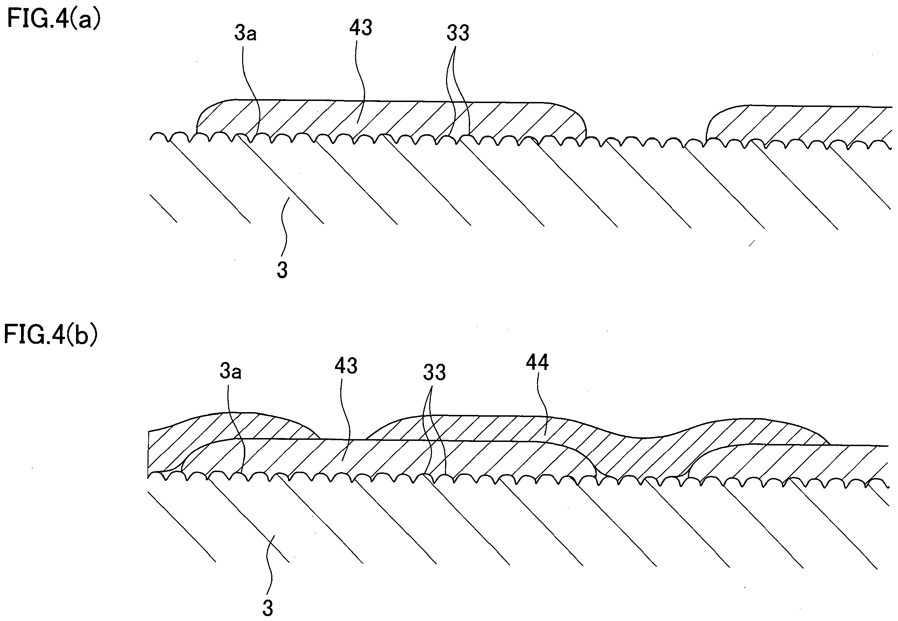

As shown in FIG. 4A, to begin with, only the first white ink layer 43 is printed on the top surface 3a of the coating layer 3. Irrespective of the printing method, as shown in FIG. 3, ink is provided to form dots (a dot pattern) in the first white ink layer 43. For this reason, the top surface of the first white ink layer 43 is rough. When neighboring dots are connected with each other, the dots are provided to form a mesh. Alternatively, ink is provided not to form dots but to form a mesh. An arrangement pitch P of the dots (or a pitch of the mesh) is significantly longer than the diameter of each of the convexities 33 which are formed on the top surface 3a of the coating layer 3 and are fine particles in shape. The arrangement pitch P of the dots is, for example, 0.2mm. A gap between the dots is, for example, about 40 to 100µm.

Subsequently, as shown in FIG. 4B, the second white ink layer 44 is printed on the top surface of the first white ink layer 43. Onto the rough top surface of the first white ink layer 43, the second white ink layer 44 in which the ink is provided to form the dots is pressed. With this, the ink of the second white ink layer 44 enters the concavities on the top surface of the first white ink layer 43. Furthermore, as the ink in the second white ink layer 44 enters the concavities on the first white ink layer 43, the thickness of parts of the second white ink layer 44 which parts are formed on the convexities in the first white ink layer 43 is reduced. For this reason, the degree of the surface roughness of the top surface of the second white ink layer 44 is reduced to be smaller than the degree of the surface roughness of the top surface of the first white ink layer 43 wh ink layer 43 is printed.

Thereafter, the third white ink layer 45 is printed on the top surface of the second white ink layer 44. For the same reason as above, the degree of the surface roughness of the top surface of the third white ink layer 45 is reduced to be smaller than the degree of the surface roughness of the top surface of the second white ink layer 44 before the third white ink layer 45 is printed. Subsequently, the first color ink layer 46 is printed on the top surface of the third white ink layer 45 and the top surface 3a of the coating layer 3. In the first color ink layer 46, the degree of the surface roughness of the top surface of a part at which the first color ink layer 46 is in contact with the top surface of the third white ink layer 45 is reduced to be smaller than the degree of the surface roughness of the top surface of the third white ink layer 45 before the first color ink layer 46 is printed. In the first color ink layer 46, the top surface of a part at which the first color ink layer 46 is in contact with the top surface 3a of the coating layer 3 is arranged to be rough at the same level as the top surface of the first white ink layer 43 when only the first white ink layer 43 is printed. Subsequently, the second color ink layer 47 is printed on the top surface of the first color ink layer 46. The degree of the surface roughness of the top surface of the second color ink layer 47 is reduced to be smaller than the degree of the surface roughness of the top surface of the first color ink layer 46 before the second color ink layer 47 is printed. Lastly, the third color ink layer 48 is printed on the top surface of the second color ink layer 47. The degree of the surface roughness of the top surface of the third color ink layer 48 is reduced to be smaller than the degree of the surface roughness of the top surface of the second color ink layer 47 before the third color ink layer 48 is printed.

In this manner, because the ink layer 4 has a multi-layer structure, the degree of the surface roughness of the top surface of the ink layer 4 is reduced as compared to the case where the ink layer 4 has a single-layer structure. When the degree of a surface roughness of a surface is reduced, the surface may be still rough or substantially flat.

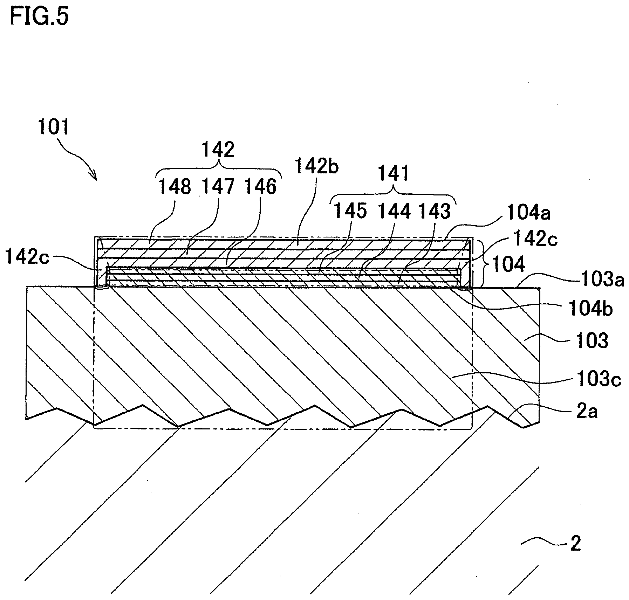

In the present embodiment, the top surface of the coating layer 3 has the surface roughness (the concavities 31 and the convexities 32) which is more gentle than the surface roughness (the concavities 23 and the convexities 24) of the top surface 2a of the cast article 2. Alternatively, for example, as shown in FIG. 5, the top surface of the coating layer 103 may be substantially flat. Because the coating layer 103 is formed by coating, the degree of the surface roughness is reduced to be smaller than the degree of the surface roughness of the top surface 2a of the cast article 2, and is s coating layer 103 is formed by conducting electrostatic coating af coating. In other words, the top surface of the coating layer 103 is formed by spraying. For this reason, unillustrated convexities which are fine particles in shape are formed on the top surface of the coating layer 103. The arrangement of the coating layer 103 other than the above is identical with that of the coating layer 3. It is noted that FIG. 5 does not show a conversion coating film which is formed on the top surface of the cast article 2. The ink layer 104 of the decorated cast article 101 shown in FIG. 5 is formed by laminating, on the plural ink layers (the first white ink layer 143, the second white ink layer 144, and the third white ink layer 145) which are formed by white ink, the ink layers (the first color ink layer 146, the second color ink layer 147, and the third color ink layer 148) which are formed by color ink. The first to third color ink layers 146 to 148 are slightly larger in area than the first to third white ink layers 143 to 145 and cover the entirety of the first to third white ink layers 143 to 145. By the first to third white ink layers 143, 144, and 145, the white ink layer 141 (which is equivalent to the fourth ink layer of the present invention) is formed. Furthermore, by the first to third color ink layers 146, 147, and 148, the color ink layer 142 (which is equivalent to the fifth ink layer of the present invention) is formed. The bottom surface of the color ink layer 142 is in contact with the top surface of the white ink layer 141 and the top surface of the coating layer 103. The arrangement of the white ink layer 141 and the arrangement of the color ink layer 142 are identical with the arrangement of the white ink layer 41 and the arrangement of the color ink layer 42. Assume that the length of a part 142c where the color ink layer 142 is in contact with the top surface of the coating layer 103 is L2. This length L2 is a length in the left-right direction in FIG. 1. Further assume that the length of a part 42c where the color ink layer 42 is in contact with the top surface 3a of the coating layer 3 is L1. This length L1 is a length in the left-right direction in FIG. 1. The length L2 is shorter than the length L1. The ink layer 104 is formed by the same method as the ink layer 4 above. For this reason, in the same manner as in the ink layer 4, the degree of the surface roughness of the top surface of the ink layer 104 is reduced as compared to the case where the ink layer 104 has a single-layer structure. FIG. 5 schematically shows how the first to third color ink layers 146 to 148 constituting the color ink layer 142 are laminated. The figure, however, does not specify that the top surface and the bottom surface of the first color ink layer 146 are larger in area than the top surfaces and the bottom surfaces of the second and third color ink layers 147 and 148. The ink layer 143 is equivalent to the first ink layer of the present invention, the ink layer 144 is equivalent to the second ink layer of the present invention, and the ink layers 145 to 148 are each equivalent to one of the third ink layers of the present invention. The ink layers 143 to 145 are each equivalent to a print layer 5w of the base applica 146 to 148 are each equivalent to a print layer 5c of the base applicatio

As described above, the top surface 2a of the cast article 2 has a relatively large surface roughness (the concavities 23 and the convexities 24). When printing is directly conducted on the top surface 2a of the cast article 2 by the pad printing, ink may not be adhered to the concavities 23. In the case of the inkjet printing, while ink is adhered to the bottom of each concavity 23, the ink may not be adhered to a part of the side surface of each concavity 23 (a part of the side surface of each convexity 24). In the case of the screen printing, the thickness of the ink is significantly irregular. To be more specific, while the ink is adhered to each concavity 23 to be very thick, the ink is adhered to each convexity 24 to be very thin.

To print an ink layer on the surface of a cast article with such a surface roughness, Patent Literature 1 above teaches that the surface of the cast article is polished to be sufficiently flat for printing. The polishing improves the adhesiveness between the cast article and the ink layer. However, the polishing to achieve the smoothness sufficient for printing requires more time and labor than the polishing for dimension correction. For this reason, while decoration which excels in design, adhesiveness, and abrasion resistance is formed on the surface of the cast article, the polishing deteriorates the productivity. Furthermore, as the decorated area increases, the polished area increases, with the result that the productivity is further deteriorated. Furthermore, when, for example, a region to be decorated is a concave curved surface or a convexity is formed in the vicinity of a region to be decorated, the polishing is difficult. Because a decoratable region is limited in this way, the degree of freedom in decoration is not high.

In the present embodiment and the modification shown in FIG. 5, the coating layer 3, 103 formed by coating is provided to be in contact with the top surface 2a of the cast article 2 and the bottom surface 4b, 104b of the ink layer 4, 104. Because the coating layer 3, 103 is formed on the surface of the cast article 2 where the surface roughness (the concavities 23 and the convexities 24) is formed, the contact area between the surface 2a of the cast article 2 and the coating layer 3, 103 is large. For this reason, the adhesiveness between the surface 2a of the cast article 2 and the coating layer 3, 103 is high.

Furthermore, the coating layer 3, 103 is formed not only on the convexities 24 but also in the concavities 23 of the surface 2a of the cast article 2. The degree of the surface roughness of the top surface 3a, 103a of the coating layer 3, 103 is therefore reduced, and hence the adhesiveness of the ink layer 4, 104 with respect to the top the coating layer 3, 103 is improved..

The ink layer 4, 104 is therefore formed on the less-rough surface of the coating layer 3, 103 which is highly adhesive to the cast article 2. This improves the adhesiveness between the ink layer 4, 104 and the cast article 2.

In addition to the above, on the top surface 3a, 103a of the coating layer 3, 103 formed by spraying, fine convexities 33 (not shown in FIG. 5) are formed. Furthermore, the ink layer 4, 104 is directly printed on the top surface 3a, 103a of the coating layer 3, 103. When ink is transferred from a forme to the surface of a printing target in forme-based printing, ink is typically pressed onto the printing target. When an ink layer is formed by formeless printing, ink is also pressed onto a printing target. For this reason, the ink layer 4, 104 formed by printing is pressed onto the surface of the coating layer 3, 103 having the fine convexities 33. In this way, the contact area between the coating layer 3, 103 and the ink layer 4, 104 is enlarged, and hence the adhesiveness between the coating layer 3, 103 and the ink layer 4, 104 is further improved.

In addition to the above, the top surface 3a of the coating layer 3 of the present embodiment has a gentle surface roughness (the concavities 31 and the convexities 32) which is sufficient for attaining the adhesiveness of the ink layer 4. For this reason, the contact area between the ink layer 4 and the coating layer 3 is enlarged as compared to the case where the surface 103a of the coating layer 103 is flat (but has convexities which are fine particles in shape) as shown in FIG. 5. This further improves the adhesiveness between the ink layer 4 and the coating layer 3 and improves the adhesiveness between the cast article 2 and the ink layer 4.

In addition to the above, when the ink layer 4, 104 is printed on the top surface 3a, 103a of the coating layer 3, 103, a part of the ink forming the ink layer 4, 104 permeates the coating layer 3, 103. As a result, on the top surface 3a, 103a of the coating layer 3, 103, the ink of the ink layer 4, 104 is mixed with the paint of the coating layer 3, 103 (i.e., mutual diffusion occurs) . This further improves the adhesiveness between the coating layer 3, 103 and the ink layer 4, 104. Furthermore, because the adhesiveness between the coating layer 3, 103 and the ink layer 4, 104 is improved by the fine convexities 33 (not shown in FIG. 5) formed on the top surface 3a, 103a of the coating layer 3, 103, the adhesiveness between the cast article 2 and the ink layer 4, 104 is improved as compared to the case where the ink layer 4, 104 is directly printed on the surface 2.

In this way, the adhesiveness of the ink layer 4, 104 with respect to the cast article 2 is improved by providing the coating layer 3, 103 having the surface formed by spraying so that the coating layer 3, 103 is in contact with the surface 2a of the cast article 2 and the bottom surface of the ink layer 4, 104.

In addition to the above, the top surface 4a, 104a of the ink layer 4, 104 is formed to be smaller in area than the top surface 3a, 103a of the coating layer 3, 103. For this reason, the ink layer 4, 104 tends to receive a force in a crosswise direction. The thickness of the ink layer 4, 104, however, is at least a part smaller than the maximum thickness of a part in contact with the ink layer 4, 104 of the coating layer 3, 103. For this reason, when the surface of the decorated cast article 1, 101 is rubbed by an object, the object is less likely to be caught at an edge (side surface 4c) of the ink layer 4, 104. The abrasion resistance of the ink layer 4, 104 is therefore further improved. Furthermore, when the thickness of the ink layer 4, 104 is smaller than the maximum thickness of the part in contact with the ink layer 4, 104 of the coating layer 3, 103, the object is further less likely to be caught at the edge (side surface 4c) of the ink layer 4, 104. The abrasion resistance of the ink layer 4, 104 is therefore further improved.

In addition to the above, because the adhesiveness between the coating layer 3, 103 and the ink layer 4, 104 is high, the ink layer 4, 104 is less likely to be peeled off. The abrasion resistance of the ink layer 4, 104 is therefore further improved.

As described above, the adhesiveness of the ink layer 4, 104 with respect to the cast article 2 is improved by providing the coating layer 3, 103 having the top surface 3a, 103a which is formed by spraying so that the contact layer 3, 103 is in contact with the surface 2a of the cast article 2 and the bottom surface of the ink layer 4, 104. This makes it possible to do away with the polishing of the surface 2a of the cast article 2 by which the smoothness sufficient for attaining the adhesiveness of the ink layer 4, 104 is obtained, and hence the productivity is improved. Furthermore, the coating layer 3, 103 is easily formed by coating, irrespective of the shape of the cast article 2. High productivity is therefore achieved.

The top surface 3a, 103a of the coating layer 3, 103 is formed than the top surface 4a, 104a of the ink layer 4, 104. Furthermore, the is easily formed by coating, irrespective of the shape of the cast article 2. The ink layer 4, 104 is therefore easily formed irrespective of the shape of the cast article 2, and hence the degree of freedom in decoration is high.

For the reasons above, the decorated cast article 1, 101 which is decorated by the ink layer 4, 104 of the present embodiment or the modification shown in FIG. 5 is good in productivity and excels in the degree of freedom in decoration, adhesiveness, and abrasion resistance.

In addition to the above, in the present embodiment and the modification show in FIG. 5, the ink layer 4, 104 has a multi-layer structure. For this reason, as described above, the degree of the surface roughness of the top surface of the ink layer 4, 104 is reduced as compared to the case where the ink layer 4, 104 has a single-layer structure. The abrasion resistance of the ink layer 4, 104 is therefore further improved.

In addition to the above, the ink layer 4, 104 is formed by conducting printing six times on the top surface of the coating layer 3, 103 having the fine convexities 33 (not shown in FIG. 5) which are formed by spraying. For this reason, the first white ink layer 43, 143 is pressed onto the coating layer 3, 103 six times. Therefore, as compared to the case where the ink layer 4, 104 has a single-layer structure, the contact area between the coating layer 3, 103 and the ink layer 4, 104 is further enlarged and the adhesiveness between the coating layer 3, 103 and the ink layer 4, 104 is further improved.

In addition to the above, when parts of the second white ink layer 44, 144 are adhered to the top surface 3a, 103a of the coating layer 3, 103 through gaps between the dots of the first white ink layer 43, 143, the contact area between the coating layer 3, 103 and the ink layer 4, 104 is further enlarged. This further improves the adhesiveness between the coating layer 3, 103 and the ink layer 4, 104. Alternatively, parts of the third white ink layer 45, 145 may be adhered to the top surface 3a, 103a of the coating layer 3, 103 through gaps between the dots of the first white ink layer 43, 143 and gaps between the dots of the second white ink layer 44, 144. The adhesiveness between the coating layer 3, 103 and the ink layer 4, 104 is further improved also in this case.

In addition to the above, each of the first to third white ink laye 145 and the first to third color ink layers 46 to 48, 146 to 148 is printed to form dots. For this reason, onto the top surface of the first white ink layer 43, 143 in which ink is provided to form dots, the second white ink layer 44, 144 in which ink is provided to form dots is pressed. The same holds true for any neighboring two layers among the layers 44 to 48, 144 to 148. This further enlarges the contact area between the neighboring two layers, and hence the adhesiveness between the neighboring two layers is improved. The adhesiveness between the coating layer 3, 103 and the ink layer 4, 104 is therefore further improved.

In addition to the above, in the present embodiment and the modification shown in FIG. 5, the color ink layer 42, 142 is in contact with the top surface of the white ink layer 41, 141 and the top surface 3a, 103a of the coating layer 3, 103. On the top surface 3a, 103a of the coating layer 3, 103 which is large in area, a thin part (42c, 142c) formed only of the color ink layer 42, 142 and a thick part (42b, 142b) in which the white ink layer 41, 141 and the color ink layer 42, 142 are laminated are formed. While FIG. 5 shows that the ink layer 104 is even in height, FIG. 5 is a schematic view. In reality, a part where the white ink layer 141 overlaps the color ink layer 142 (142b) is thicker than the color ink layer 142 (142c) alone. For this reason, the thickness of the edge of the ink layer 4, 104 (i.e., the height of the side surface 4c) is reduced as compared to the case where the entirety of the bottom surface of the color ink layer 42, 142 is formed on the top surface of the white ink layer 41, 141. Therefore when the surface of the decorated cast article 1, 101 is rubbed by an object, the object is less likely to be caught at the edge (side surface 4c) of the ink layer 4, 104. The ink layer 4, 104 becomes further less likely to be peeled off, and hence the abrasion resistance of the ink layer 4, 104 is further improved.

In addition to the above, in the present embodiment, the color ink layer 42 has the step surface 42a. The step surface 42a is formed outside a part in contact with the top surface of the white ink layer 41 of the color ink layer 42. This stepped surface 42a is more gently inclined than the side surface of the color ink layer 42 when the entirety of the bottom surface of the color ink layer 42 is formed on the top surface of the white ink layer 41. When the surface is gently inclined, the inclination angle with respect to the direction orthogonal to the top surface 3a of the coating layer 3 is large. When the inclination of the stepped surface 42a is gentle, an object is less likely to be caught at the edge (side surface 4c) of the ink layer 4 when the surface of the decorated cast article 1 is rubbed by the object. The ink layer 4 becomes further less likely to be peeled off, an resistance of the ink layer 4 is further improved.

In addition to the above, the content of the synthetic resin in the color ink layer 42, 142 is larger than the content of the synthetic resin in the white ink layer 41, 141. The adhesiveness of ink increases as the content of the synthetic resin therein increases. For this reason, the adhesiveness of the color ink layer 42, 142 with respect to the coating layer 3, 103 is higher than that of the white ink layer 41, 141. For this reason, the adhesiveness between the ink layer 4, 104 and the coating layer 3, 103 is improved as compared to the case where only the white ink layer 41, 141 is in contact with the top surface 3a, 103a of the coating layer 3, 103. In this way, the abrasion resistance of the ink layer 4, 104 is further improved.

In addition to the above, on the surface 2a of the cast article 2, the conversion coating film 22 (not shown in FIG. 5) is formed. The surface of the conversion coating film 22 has a fine surface roughness. This further increases the contact area between the cast article 2 and the coating layer 3, 103 and further improves the adhesiveness between the cast article 2 and coating layer 3, 103. When an untreated cast article includes aluminum or magnesium, a natural oxide film is formed on the surface of the untreated cast article when the article is left in the atmosphere. By the conversion coating, such a natural oxide film is removed and the formation of a new natural oxide film is prevented. In this way, the anticorrosion property of the cast article 2 is improved.

When a color ink layer with dark color is directly formed on the top surface 3a, 103a of the coating layer 3, 103 with dark color, coloring is poor. In the present embodiment, because the white ink layer 41, 141 which is white in color and the color ink layer 42, 142 which is non-white in color are superposed on the top surface 3a, 103a of the coating layer 3, 103, coloring of the color ink layer 42, 142 is good. Furthermore, the color ink layer 42, 142 entirely covers the top surface of the white ink layer 41, 141. For this reason, the white ink layer 41, 141 is not exposed even if the printed color ink layer 42, 142 is slightly misaligned with the white ink layer 41, 141.

The white ink layer 41, 141 has a multi-layer structure. For this reason, the gaps between the dots of the first white ink layer 43, 143 are filled with the second white ink layer 44, 144 and the third white ink layer 45, 145. The color of the white ink layer 41, 141 is therefore dense as compared to the case where the white ink layer 4 layer structure. In this way, coloring of the color ink layer 42, 142 is im

In addition to the above, the color ink layer 42, 142 has a multi-layer structure. For this reason, the gaps between the dots of the first color ink layer 46, 146 are covered with the second color ink layer 47, 147 and the third color ink layer 48, 148. The color of the color ink layer 42, 142 is therefore dense as compared to the case where the color ink layer 42, 142 has a single-layer structure. The appearance of the ink layer 4, 104 is therefore further improved.

In addition to the above, the average thickness of the ink layer 4, 104 is larger than 1/10 of the average thickness of the coating layer 3, 103. This prevents the ink layer 4, 104 from being peeled off due to excessive thinness, and further improves the adhesiveness between the ink layer 4, 104 and the coating layer 3, 103. Furthermore, the weather resistance of the ink layer 4, 104 is improved as the thickness of the ink layer 4, 104 is increased.

The ink layer 4, 104 is preferably formed by one of screen printing, pad printing, and inkjet printing. This makes it possible to easily form the ink layer 4, 104 with high decoration precision, irrespective of the shape of the cast article 2. The degree of freedom in the decoration is therefore improved.

At least a part of the coating layer 3 is preferably formed by one of electrodeposition coating, powder coating, and electrostatic coating. The coating layer 103 is formed by electrodeposition coating and electrostatic coating. Because the coating layer 3, 103 is formed by one of electrodeposition coating, powder coating, and electrostatic coating, variations in the thickness of the coating layer 3, 103 are restrained. For this reason, the adhesiveness between the ink layer 4, 104 and the coating layer 3, 103 is further improved.

The top surface 3a of the coating layer 3 is preferably formed by electrostatic coating. Furthermore, the top surface 103a of the coating layer 103 is formed by electrostatic coating. The electrostatic coating excels in achieving good appearance. For this reason, the appearance of the decorated cast article 1, 101 is improved by forming the top surface 3a, 103a of the coating layer 3, 103 by the electrostatic coating.

The ink layer 4, 104 preferably includes at least one of polyurethane resin and acrylic resin. With this, the weather resistance of the ink layer 4, 104 is improved while the adhesiveness is maintained. Further preferably, the ink layer 4, 104 i This further improves the weather resistance of the ink layer 4, 104.

The coating layer 3, 103 preferably includes at least one of acrylic resin, epoxy resin, and melamine resin. This improves the adhesiveness between the ink layer 4, 104 and the coating layer 3, 103. Further preferably, the coating layer 3, 103 includes acrylic resin. This further improves the weather resistance of the coating layer 3, 103 while the adhesiveness between the ink layer 4, 104 and the coating layer 3, 103 is maintained.

While a preferred embodiment of the invention has been described, the present invention is not limited to the embodiment above and the modification shown in FIG. 5, and it is evident that many alternatives, modifications and variations will be apparent to those skilled in the art, within the scope of the claims. Furthermore, below-described variations can be suitably combined with one another and implemented. It is noted that the term "preferable" is non-exclusive in the present specification and indicates "preferable but not limited to".

While in the embodiment above and the modification shown in FIG. 5 each of the white ink layer 41, 141 and the color ink layer 42, 142 has a three-layer structure, each of these layers may have a multi-layer structure which is not a three-layer structure, or may have a single-layer structure. Furthermore, the number of layers in the white ink layer 41, 141 may be different from the number of layers in the color ink layer 42, 142. Furthermore, the ink layer 4, 104 may be formed solely of the white ink layer 41, 141, and may not include the color ink layer 42, 142. The ink layer 4, 104 may have a multi-layer structure which is not a six-layer structure, or may have a single-layer structure.

When the ink layer 4, 104 has a multi-layer structure and is formed of two or more layers, the ink layer 4, 104 has the following characteristics.

The degree of the surface roughness of the top surface of the second white ink layer 44, 144 is reduced to be smaller than the degree of the surface roughness of the top surface of the first white ink layer 43, 143 when only the first white ink layer 43, 143 is printed. As such, the degree of the surface roughness of the top surface of the ink layer 4, 104 having a multi-layer structure and formed of two or more layers is reduced to be smaller than the degree of the surface roughness of the top surface of the ink layer 4, 104 which has a single-layer structure. In this way, the abrasion resistance of the ink layer 4, 104 is further improved.

The ink layer 4, 104 having a multi-layer structure and formed is formed by conducting printing twice or more. For this reason, the f 143 is pressed onto the top surface 3, 103a of the coating layer 3, 103 having fine convexities 33 (not shown in FIG. 5) twice or more. The contact area between the coating layer 3, 103 and the ink layer 4, 104 is therefore enlarged as compared to the case where the ink layer 4, 104 has a single-layer structure, and hence the adhesiveness between the coating layer 3, 103 and the ink layer 4, 104 is further improved.

In addition to the above, in the case of the ink layer 4, 104 having a multi-layer structure of two or more layers, in the same manner as in the embodiment above, the layer with the single-layer structure in which ink is provided to form dots is pressed onto the top surface of the layer with the single-layer structure in which ink is provided to form dots. For this reason, the contact area between the neighboring two layers both having the single-layer structure is further enlarged, and the adhesiveness between the neighboring two layers is improved. As a result, the adhesiveness between the coating layer 3, 103 and the ink layer 4, 104 is further improved.

The colors of the coating layer 3, 103, the white ink layer 41, 141, and the color ink layer 42, 142 are not limited to those described in the embodiment above. For example, when the coating layer 3, 103 is white in color, the ink layer 4, 104 may be formed by color ink with a single color.

While in the embodiment above the ink layer 4, 104 having a six-layer structure is formed by conducting printing six times, the ink layer 4, 104 having an n-layer structure may be formed by conducting printing (n-1) or fewer times. It is noted that n is an integer of 2 or more.

The following will describe a specific example of the formation of an ink layer 4 (104) having a six-layer structure by conducting printing five times. To begin with, a pad (forme) is pressed onto an intaglio to which ink has been applied, so that a first white ink layer 43 (143) is transferred to the pad. Subsequently, the first white ink layer 43(143) on the pad is pressed onto a second ink layer newly applied in the intaglio , so that the second white ink layer 44 (144) is laminated on the first white ink layer 43 (143) on the pad. Then this pad is pressed onto a top surface 3a (103a) of a coating layer 3 (103), with the result that the first white ink layer 43 (143) and the second white ink layer 44 (144) are printed on the top surface 3a (103a) of the coating layer 3 (103). Subsequently, by the steps similar to those in the embodiment above, a third white ink layer 45 (145), a first color ink layer 46 (146), a second color ink layer 47 (147), and a third color i printed in order. In this way, the ink layer 4 (104) is formed by co times.

In addition to the above, the first white ink layer 43 (143) and the second white ink layer 44 (144) can be formed by conducting printing once, when screen printing is employed. To be more specific, on a screen (forme) provided on the coating layer 3 (103), a first white ink layer 43 (143) and a second white ink layer 44 (144) are laminated, and the ink is pressed in at the same time scraped by a squeegee. In this way, the first white ink layer 43 (143) and the second white ink layer 44 (144) are formed by conducting printing once. Alternatively, by another type of forme-based printing, a first white ink layer 43 (143) and a second white ink layer 44 (144) are laminated on a forme, and the first white ink layer 43 (143) and the second white ink layer 44 (144) are formed by conducting printing once.

Instead of forming the first white ink layer 43 (143) and the second white ink layer 44 (144) by conducting printing once, two neighboring ones of a second white ink layer 44 (144), a third white ink layer 45 (145), a first color ink layer 46 (146), a second color ink layer 47 (147), and a third color ink layer 48 (148) may be formed by conducting printing once. Also in this case, the ink layer 4 (104) is formed by conducting printing five times.

In addition to the above, the ink layer 4, 104 may be formed by conducting the following operation at least twice: two ink layers are laminated on a forme which is a pad, screen, or the like and printing is conducted. Furthermore, the ink layer 4, 104 may be formed by conducting the following operation at least once: three or more ink layers are laminated on a forme and printing is conducted.

When the ink layer 4, 104 having an n-layer structure is formed by conducting printing (n-1) or fewer times, the following effects are achieved. Because the ink layer 4, 104 has a multi-layer structure, the degree of the surface roughness of the top surface of the ink layer 4, 104 is reduced to be smaller than the degree of the surface roughness of the ink layer 4, 104 having a single-layer structure, in the same manner as in the embodiment above. The abrasion resistance of the ink layer 4, 104 is therefore further improved.

Furthermore, when the ink layer 4, 104 is formed by conducting printing twice or more, the ink layer 4, 104 is pressed, twice or more, onto the top surface of the coating layer 3, 103 on which the fine convexities 33 (not shown in FIG. 5) are formed. For this reason, the contact area between the coating layer 3, 103 and the enlarged as compared to the case where the ink layer 4, 104 has a s with the result that the adhesiveness between the coating layer 3, 103 and the ink layer 4, 104 is further improved.

When the ink layer 4, 104 is formed by conducting printing once, the ink layer 4, 104 is pressed once onto the top surface 3a, 103a of the coating layer 3, 103. However, the thickness of the layer which is pressed once is larger than the thickness in the case where the ink layer 4, 104 has a single-layer structure. For this reason, while the pressing is conducted once, ink particles are easily movable due to the large thickness. For this reason, the contact area between the coating layer 3, 103 and the ink layer 4, 104 is further enlarged as compared to the case where the ink layer 4, 104 has a single-layer structure, with the result that the adhesiveness between the coating layer 3, 103 and the ink layer 4, 104 is further improved.

In addition to the above, two or more layers (e.g., the first white ink layer 43 and the second white ink layer 44) in each of which ink is provided to form dots are laminated, and these layers are pressed onto the coating layer 3, 103. For this reason, the adhesiveness of the laminated two or more layers is improved. The adhesiveness between the coating layer 3, 103 and the ink layer 4, 104 is therefore improved.

When a printing method such as pad printing and screen printing in which ink layers are laminated on a forme is employed, each of the ink layers laminated on the forme (a pad, a screen, or the like) has a single-layer structure. In other words, when only one ink layer is provided on a forme and printing is conducted, the one ink layer formed by this single printing is the single-layer structure. When plural ink layers are laminated on a forme and printing is conducted, each of the ink layers formed by the single printing is the single-layer structure. In a case of formeless printing such as inkjet printing or a forme-based printing in which no ink layer is laminated on a forme, a layer formed by single printing is the single-layer structure.

While in the embodiment above the bottom surface of the color ink layer 42, 142 is in contact with the entire top surface of the white ink layer 41, 141 and the top surface 3a, 103a of the coating layer 3, 103, the bottom surface of the color ink layer 42, 142 can be in contact with a part of the top surface of the white ink layer 41, 141 and the top surface 3a, 103a of the coating layer 3, 103.

The ink layer 4, 104 can be a single-layer structure or a multi include an ink layer (equivalent to one of the third ink layers of th having the bottom surface which is in contact with a part of the top surface of the color ink layer 42, 142.

The ink layer 4, 104 may have a single-layer structure or a multi-layer structure, and include an ink layer (equivalent to one of the third ink layers of the present invention) having the bottom surface which is in contact with at least a part of the top surface of the color ink layer 42, 142 and the top surface 3a, 103a of the coating layer 3, 103.

While in the embodiment above the content (percent by mass) of the synthetic resin in the color ink layer 42, 142 is larger than the content (percent by mass) of the synthetic resin in the white ink layer 41, 141, the content (percent by mass) of the synthetic resin in the color ink layer 42, 142 may be equal to or smaller than the content (percent by mass) of the synthetic resin in the white ink layer 41, 141.

While in the embodiment above the first to third white ink layers 43 to 45, 143 to 145 are identical with one another in ingredients and the ratio of the ingredients, these layers may be different from one another in ingredients and the ratio of the ingredients. Furthermore, while in the embodiment above the first to third color ink layers 46 to 48, 146 to 148 are identical with one another in ingredients and the ratio of the ingredients, these layers may be different from one another in ingredients and the ratio of the ingredients. In such a modification, the content (percent by mass) of the synthetic resin in the first color ink layer 46, 146 which is in contact with the top surface 3a, 103a of the coating layer 3, 103 is preferably larger than the content (percent by mass) of the synthetic resin in the first white ink layer 43, 143 which is in contact with the top surface 3a, 103a of the coating layer 3, 103, but may be equal to or smaller than the content (percent by mass) of the synthetic resin in the first white ink layer 43, 143 which is in contact with the top surface 3a, 103a of the coating layer 3, 103.

A transparent or semi-transparent clear layer may be formed by coating or printing to be in contact with the top surface 4a, 104a of the ink layer 4, 104 and the top surface 3a, 103a of the coating layer 3, 103.

While in the embodiment above and the modification shown in FIG. 5 the conversion coating film 22 (not shown in FIG. 5) is formed on the surface 2a of the cast article 2, the conversion coating film 22 may not be formed. When th of, for example, a material which includes aluminum or magnesium, a formed on the surface of the cast article. On the surface of the natural oxide film, a fine surface roughness is formed.

While in the embodiment above the decorated cast article 1, 101 in which the cast article 2 is decorated with the ink layer 4, 104 is described, a forged article formed by forging may be decorated with the ink layer 4, 104. In other words, a decorated forged article decorated with the ink layer 4, 104 may be formed by providing, on the surface of a forged article, the coating layer 3, 103 and the ink layer 4, 104 in the similar manner as in the embodiment above. Examples of the decorated forged article include wheels, body frames, and exterior parts of two-wheeled and four-wheeled vehicles. On the surface of the forged article, a surface roughness is formed due to shot blast working or cutting for dimension correction. This surface roughness is on the same level as the surface roughness (the concavities 23 and the convexities 24) of the surface 2a of the cast article 2. On the surface of the forged article, a conversion coating film is preferably formed.

In the present invention and specification, the term "in contact with" indicates direct contact. Furthermore, in the present invention and specification, printing encompasses both forme-based printing and formeless printing. In forme-based printing, ink is transferred from a forme to a printing target. In so doing, the ink is pressed onto the printing target. Examples of the formeless printing include electrostatic photocopying (used by photocopiers), melting/dye-sublimation heat transfer (used by thermal printers), and inkjet printing. In such formeless printing such as electrostatic photocopying (used by photocopiers), melting/dye-sublimation heat transfer (used by thermal printers), and inkjet printing, ink is transferred to a printing target. In so doing, the ink is pressed onto the printing target. In addition to the above, ink is ejected from a nozzle and is adhered to a printing target, also in formeless printing such as inkjet printing. In so doing, the ink is pressed onto the printing target. As such, when ink is directly printed on a printing target, the ink is pressed onto the printing target. In the present invention and specification, the "forme" is used for transferring ink to a printing target. Furthermore, the "forme" functions as a medium for transferring ink to a printing target in printing. Specific examples of the forme include a wood block, a rubber forme, a metal forme, and a silk screen. Furthermore, a pad by which ink transferred from a forme is further transferred to a printing target is also a type of the forme.

In the present invention, a decorated cast article or a dec indicates a decorated cast or forged article. A cast article or a dec indicates a cast or forged article.

In this specification, when the degree of a surface roughness of a surface of a coating layer is small, the surface of the coating layer may be rough or flat.

### [Reference Signs List]

1, 101 DECORATED CAST ARTICLE
2 CAST ARTICLE
2a TOP SURFACE
3, 103 COATING LAYER
3a, 103a TOP SURFACE
3b BOTTOM SURFACE
3c,103c PART IN CONTACT WITH INK LAYER OF COATING LAYER
4, 104 INK LAYER
4a, 104a TOP SURFACE
4b, 104b BOTTOM SURFACE
4c SIDE SURFACE
41, 141 WHITE INK LAYER (FOURTH INK LAYER)
42, 142 COLOR INK LAYER (FIFTH INK LAYER)
42b, 142b PART IN CONTACT WITH TOP SURFACE OF WHITE INK LAYER OF COLOR INK LAYER
42c, 142c PART IN CONTACT WITH TOP SURFACE OF COATING LAYER OF COLOR INK LAYER (PART IN CONTACT WITH TOP SURFACE OF COATING LAYER OF FIFTH LAYER)
43, 143 FIRST WHITE INK LAYER (FIRST INK LAYER)
44, 144 SECOND WHITE INK LAYER (SECOND INK LAYER)
45, 145 THIRD WHITE INK LAYER (THIRD INK LAYER)
46, 146 FIRST COLOR INK LAYER (THIRD INK LAYER)
47, 147 SECOND COLOR INK LAYER (THIRD INK LAYER)
48, 148 THIRD COLOR INK LAYER (THIRD INK LAYER)

## Claims

1. A decorated cast article or a decorated forged article (1), comprising:
a coating layer (3, 103) which coats a metal top surface (2a) of a cast article or a forged article (2), is in contact with a bottom surface (4b, 104b) of a printed ink layer (4, 104) which includes pigment, and has a top surface (3a, 103a) which is larger in area than a top surface (4a, 104a) of the printed ink layer (4, 104), wherein
in the coating layer (3, 103), at least a top surface of the coating layer (3, 103) is formed by spraying, and
the thickness of at least a part of the printed ink layer (4, 104)including the pigment is smaller than the maximum thickness of a part in contact with the ink layer (4,104) of the coating layer (3, 103), and
the ink layer (4, 104) is directly printed on the top surface (3a, 103a) of the coating layer (3, 103) and decorates the cast article or the forged article (2).

2. The decorated cast article or the decorated forged article (1) according to claim 1, wherein the thickness of the printed ink layer (4, 104) which includes the pigment is smaller than the maximum thickness of the part in contact with the ink layer (4,104) of the coating layer (3, 103)..

3. The decorated cast article or the decorated forged article (1) according to claim 1 or 2, wherein, the printed ink layer (4, 104) including the pigment includes:
a first ink layer (43, 143) which is a single-layer structure and which has a bottom surface in contact with the top surface (3a, 103a) formed by spraying of the coating layer (3, 103) ; and
a second ink layer (44, 144) which is a single-layer structure and which has a bottom surface in contact with at least a part of a top surface of the first ink layer (43, 143).

4. The decorated cast article or the decorated forged article (1) according to claim 3, wherein, the printed ink layer (4, 104) including the pigment includes,
the first ink layer , the second ink layer and one or more third ink layers (45-48, 145-148), each of the third layers being a single-layer structure and laminated on at least a part of a top surface of the second ink layer (44, 144).

5. The decorated cast article or the decorated forged article (1) according to any one of claims 1 to 4, wherein, the printed ink layer (4, 104) including the pigment includes:
a fourth ink layer (41, 141) which is a single-layer structure or a multi-layer structure and which has a bottom surface in contact with the top surface (3a, 103a) formed by spaying of the coating layer (3, 103) ; and
a fifth ink layer (42, 142) which is a single-layer structure or a multi-layer structure and which has a bottom surface in contact with at least a part of a top surface of the fourth ink layer (41, 141) and the top surface (3a, 103a) formed by spaying of the coating layer (3, 103).

6. The decorated cast article or the decorated forged article (1) according to claim 5, wherein the printed ink layer (4, 104) including the pigment includes a synthetic resin, and
the content of the synthetic resin in a part in contact with the top surface (3a, 103a) of the coating layer (3, 103) of the fifth ink layer (42, 142) is larger than the content of the synthetic resin in a part in contact with the top surface (3a, 103a) of the coating layer (3, 103) of the fourth ink layer (41, 141).

7. The decorated cast article or the decorated forged article (1) according to claim 2, wherein the average thickness of the printed ink layer (4, 104) including the pigment is larger than 1/10 of the average thickness of a part in contact with the ink layer (4, 104) of the coating layer (3, 103).

8. The decorated cast article or the decorated forged article (1) according to any one of claims 1 to 7, wherein the printed ink layer (4, 104) including the pigment is formed by at least one of screen printing, pad printing, and inkjet printing.

9. The decorated cast article or the decorated forged article (1) according to any one of claims 1 to 8, wherein at least a part of the coating layer (3, 103) formed by coating is formed by at least one of electrodeposition coating, powder coating, and electrostatic coating.

10. The decorated cast article or the decorated forged article (1) according to claim 9, wherein the top surface formed by spraying (3a, 103a) of the coating layer (3, 103)is formed by electrostatic coating.

11. A method for decorating a cast article or a forged article (2), comprising:
coating a metal top surface (2a) of the cast or forged article (2) by a coating layer (3, 103), and
directly printing an ink layer (4, 104) including a pigment on the top surface of the coating layer (3, 103),
wherein at least a top surface (3a, 103a) of the coating layer (3, 103) is formed by spraying, and
wherein the ink layer (4, 104) is printed such that the top surface (3a, 103a) of the coating layer (3, 103) is larger in area than a top surface (4a, 104a) of the ink layer (4), and that the thickness of at least a part of the ink layer (4, 104) is smaller than the maximum thickness of a part in contact with the ink layer (104) of the coating layer (3, 103).

12. The method for decorating a cast article or a forged article (2) according to claim 11, wherein the ink layer (4, 104) is printed such that the thickness of the ink layer (4, 104) is smaller than the maximum thickness of the part in contact with the ink layer (4, 104) of the coating layer (3, 103).

13. The method for decorating a cast article or a forged article (2) according to claim 12, wherein directly printing an ink layer (4, 104) comprises at least one of screen printing, pad printing, and inkjet printing.

14. The method for decorating a cast article or a forged article (2) according to any one of claims 11 to 13, wherein coating the metal top surface (2a) of the cast or forged article (2) comprises forming at least a part of the coating layer by at least one of electrodeposition coating, powder coating, and electrostatic coating.

15. The method for decorating a cast article or a forged article (2) according to any one of claims 11 to 14, wherein spraying to form at least the top surface (3a, 103a) of the coating layer (3, 103) comprises electrostatic coating.

## Patentansprüche

1. Ein dekorierter gegossener Artikel oder ein dekorierter geschmiedeter Artikel (1), der folgende Merkmale aufweist:
eine Beschichtungsschicht (3, 103), die eine obere Metalloberfläche (2a) eines gegossenen Artikels oder eines geschmiedeten Artikels (2) beschichtet, mit einer unteren Oberfläche (4b, 104b) einer Gedruckte-Tinte-Schicht (4, 104), die Pigment umfasst, in Kontakt steht und eine obere Oberfläche (3a, 103a) aufweist, die eine größere Fläche aufweist als eine obere Oberfläche (4a, 104a) der Gedruckte-Tinte-Schicht (4, 104), wobei
bei der Beschichtungsschicht (3, 103) ist zumindest eine obere Oberfläche der Beschichtungsschicht (3, 103) mittels Sprühens gebildet, und
die Dicke zumindest eines Teils der Gedruckte-Tinte-Schicht (4, 104), die das Pigment umfasst, ist geringer als die maximale Dicke eines mit der Tintenschicht (4, 104) der Beschichtungsschicht (3, 103) in Kontakt stehenden Teils, und
die Tintenschicht (4, 104) ist direkt auf die obere Oberfläche (3a, 103a) der Beschichtungsschicht (3, 103) aufgedruckt und dekoriert den gegossenen Artikel oder den geschmiedeten Artikel (2).

2. Der dekorierte gegossene Artikel oder der dekorierte geschmiedete Artikel (1) gemäß Anspruch 1, bei dem die Dicke der das Pigment umfassenden Gedruckte-Tinte-Schicht (4, 104) geringer ist als die maximale Dicke des mit der Tintenschicht (4, 104) der Beschichtungsschicht (3, 103) in Kontakt stehenden Teils.

3. Der dekorierte gegossene Artikel oder der dekorierte geschmiedete Artikel (1) gemäß Anspruch 1 oder 2, bei dem die das Pigment umfassende Gedruckte-Tinte-Schicht (4, 104) folgende Merkmale umfasst:
eine erste Tintenschicht (43, 143), die eine Einschichtstruktur ist und die eine untere Oberfläche aufweist, die mit der oberen Oberfläche (3a, 103a), die mittels Sprühens der Beschichtungsschicht (3, 103) gebildet ist, in Kontakt steht; und
eine zweite Tintenschicht (44, 144), die eine Einschichtstruktur ist und die eine untere Oberfläche aufweist, die mit zumindest einem Teil einer oberen Oberfläche der ersten Tintenschicht (43, 143) in Kontakt steht.

4. Der dekorierte gegossene Artikel oder der dekorierte geschmiedete Artikel (1) gemäß Anspruch 3, bei dem die das Pigment umfassende Gedruckte-Tinte-Schicht (4, 104) die erste Tintenschicht, die zweite Tintenschicht und eine oder mehrere dritte Tintenschichten (45-48, 145-148) umfasst, wobei jede der dritten Schichten eine Einschichtstruktur ist und auf zumindest einen Teil einer oberen Oberfläche der zweiten Tintenschicht (44, 144) laminiert ist.

5. Der dekorierte gegossene Artikel oder der dekorierte geschmiedete Artikel (1) gemäß einem der Ansprüche 1 bis 4, bei dem die das Pigment umfassende Gedruckte-Tinte-Schicht (4, 104) folgende Merkmale umfasst:
eine vierte Tintenschicht (41, 141), die eine Einschichtstruktur oder eine Mehrschichtstruktur ist und die eine untere Oberfläche aufweist, die mit der oberen Oberfläche (3a, 103a), die mittels Sprühens der Beschichtungsschicht (3, 103) gebildet ist, in Kontakt steht; und
eine fünfte Tintenschicht (42, 142), die eine Einschichtstruktur oder eine Mehrschichtstruktur ist und die eine untere Oberfläche aufweist, die mit zumindest einem Teil einer oberen Oberfläche der vierten Tintenschicht (41, 141) und der mittels Sprühens der Beschichtungsschicht (3, 103) gebildeten oberen Oberfläche (3a, 103a) in Kontakt steht.

6. Der dekorierte gegossene Artikel oder der dekorierte geschmiedete Artikel (1) gemäß Anspruch 5, bei dem die das Pigment umfassende Gedruckte-Tinte-Schicht (4, 104) ein synthetisches Harz umfasst und
der Gehalt des synthetischen Harzes in einem Teil, der mit der oberen Oberfläche (3a, 103a) der Beschichtungsschicht (3, 103) der fünften Tintenschicht (42, 142) in Kontakt steht, höher ist als der Gehalt des synthetischen Harzes in einem Teil, der mit der oberen Oberfläche (3a, 103a) der Beschichtungsschicht (3, 103) der vierten Tintenschicht (41, 141) in Kontakt steht.

7. Der dekorierte gegossene Artikel oder der dekorierte geschmiedete Artikel (1) gemäß Anspruch 2, bei dem die durchschnittliche Dicke der das Pigment umfassenden Gedruckte-Tinte-Schicht (4, 104) größer ist als 1/10 der durchschnittlichen Dicke eines Teils, der mit der Tintenschicht (4, 104) der Beschichtungsschicht (3, 103) in Kontakt steht.

8. Der dekorierte gegossene Artikel oder der dekorierte geschmiedete Artikel (1) gemäß einem der Ansprüche 1 bis 7, bei dem die das Pigment umfassende Gedruckte-Tinte-Schicht (4, 104) mittels zumindest entweder eines Siebdrucks und/oder eines Tampondrucks und/oder eines Tintenstrahldrucks gebildet ist.

9. Der dekorierte gegossene Artikel oder der dekorierte geschmiedete Artikel (1) gemäß einem der Ansprüche 1 bis 8, bei dem zumindest ein Teil der Beschichtungsschicht (3, 103), die mittels Beschichtens gebildet ist, mittels zumindest entweder Elektrotauchbeschichtens und/oder Pulverbeschichtens und/oder elektrostatischen Beschichtens gebildet ist.

10. Der dekorierte gegossene Artikel oder der dekorierte geschmiedete Artikel (1) gemäß Anspruch 9, bei dem die mittels Sprühens (3a, 103a) der Beschichtungsschicht (3, 103) gebildete obere Oberfläche mittels elektrostatischen Beschichtens gebildet ist.

11. Ein Verfahren zum Dekorieren eines gegossenen Artikels oder eines geschmiedeten Artikels (2), das folgende Schritte aufweist:
Beschichten einer oberen Metalloberfläche (2a) des gegossenen oder geschmiedeten Artikels (2) mittels einer Beschichtungsschicht (3, 103), und
direktes Drucken einer ein Pigment umfassenden Tintenschicht (4, 104) auf die obere Oberfläche der Beschichtungsschicht (3, 103),
wobei zumindest eine obere Oberfläche (3a, 103a) der Beschichtungsschicht (3, 103) mittels Sprühens gebildet wird, und
wobei die Tintenschicht (4, 104) derart gedruckt wird, dass die obere Oberfläche (3a, 103a) der Beschichtungsschicht (3, 103) eine größere Fläche aufweist als eine obere Oberfläche (4a, 104a) der Tintenschicht (4) und dass die Dicke zumindest eines Teils der Tintenschicht (4, 104) geringer ist als die maximale Dicke eines mit der Tintenschicht (104) der Beschichtungsschicht (3, 103) in Kontakt stehenden Teils.

12. Das Verfahren zum Dekorieren eines gegossenen Artikels oder eines geschmiedeten Artikels (2) gemäß Anspruch 11, bei dem die Tintenschicht (4, 104) derart gedruckt wird, dass die Dicke der Tintenschicht (4, 104) geringer ist als die maximale Dicke des mit der Tintenschicht (4, 104) der Beschichtungsschicht (3, 103) in Kontakt stehenden Teils.

13. Das Verfahren zum Dekorieren eines gegossenen Artikels oder eines geschmiedeten Artikels (2) gemäß Anspruch 12, bei dem das direkte Drucken einer Tintenschicht (4, 104) zumindest entweder Siebdruck und/oder Tampondruck und/oder Tintenstrahldruck aufweist.

14. Das Verfahren zum Dekorieren eines gegossenen Artikels oder eines geschmiedeten Artikels (2) gemäß einem der Ansprüche 11 bis 13, bei dem das Beschichten der oberen Metalloberfläche (2a) des gegossenen oder geschmiedeten Artikels (2) ein Bilden zumindest eines Teils der Beschichtungsschicht anhand zumindest entweder eines Elektrotauchbeschichtens und/oder Pulverbeschichtens und/oder elektrostatischen Beschichtens aufweist.

15. Das Verfahren zum Dekorieren eines gegossenen Artikels oder eines geschmiedeten Artikels (2) gemäß einem der Ansprüche 11 bis 14, bei dem das Sprühen, um zumindest die obere Oberfläche (3a, 103a) der Beschichtungsschicht (3, 103) zu bilden, ein elektrostatisches Beschichten aufweist.

## Revendications

1. Article moulé décoré ou article forgé décoré (1), comprenant:
une couche de revêtement (3, 103) qui recouvre une surface supérieure métallique (2a) d'un article moulé ou d'un article forgé (2), est en contact avec une surface inférieure (4b, 104b) d'une couche d'encre imprimée (4, 104) qui comporte un pigment, et présente une surface supérieure (3a, 103a) qui est plus grande en superficie qu'une surface supérieure (4a, 104a) de la couche d'encre imprimée (4, 104), dans lequel
dans la couche de revêtement (3, 103) est formée par pulvérisation au moins une surface supérieure de la couche de revêtement (3, 103), et
l'épaisseur d'au moins une partie de la couche d'encre imprimée (4, 104) comportant le pigment est inférieure à l'épaisseur maximale d'une partie en contact avec la couche d'encre (4, 104) de la couche de revêtement (3, 103), et
la couche d'encre (4, 104) est imprimée directement sur la surface supérieure (3a, 103a) de la couche de revêtement (3, 103) et décore l'article moulé ou l'article forgé (2).

2. Article moulé décoré ou article forgé décoré (1) selon la revendication 1, dans lequel l'épaisseur de la couche d'encre imprimée (4, 104) qui comporte le pigment est inférieure à l'épaisseur maximale de la partie en contact avec la couche d'encre (4, 104) de la couche de revêtement (3, 103).

3. Article moulé décoré ou article forgé décoré (1) selon la revendication 1 ou 2, dans lequel la couche d'encre imprimée (4, 104) comportant le pigment comporte:
une première couche d'encre (43, 143) qui est une structure monocouche et qui présente une surface inférieure en contact avec la surface supérieure (3a, 103a) formée par pulvérisation de la couche de revêtement (3, 103); et
une deuxième couche d'encre (44, 144) qui est une structure monocouche et qui présente une surface inférieure en contact avec au moins une partie de la surface supérieure de la première couche d'encre (43, 143).

4. Article moulé décoré ou article forgé décoré (1) selon la revendication 3, dans lequel la couche d'encre imprimée (4, 104) comportant le pigment comporte
la première couche d'encre, la deuxième couche d'encre et une ou plusieurs troisièmes couches d'encre (45 à 48, 145 à 148), chacune des troisièmes couches étant une structure monocouche et stratifiée sur au moins une partie d'une surface supérieure de la deuxième couche d'encre (44, 144).

5. Article moulé décoré ou article forgé décoré (1) selon l'une quelconque des revendications 1 à 4, dans lequel la couche d'encre imprimée (4, 104) comportant le pigment comporte:
une quatrième couche d'encre (41, 141) qui est une structure monocouche ou une structure multicouche et qui présente une surface inférieure en contact avec la surface supérieure (3a, 103a) formée par pulvérisation de la couche de revêtement (3, 103); et
une cinquième couche d'encre (42, 142) qui est une structure monocouche ou une structure multicouche et qui présente une surface inférieure en contact avec au moins une partie d'une surface supérieure de la quatrième couche d'encre (41, 141) et la surface supérieure (3a, 103a) formée par pulvérisation de la couche de revêtement (3, 103).

6. Article moulé décoré ou article forgé décoré (1) selon la revendication 5, dans lequel la couche d'encre imprimée (4, 104) comportant le pigment comporte une résine synthétique, et
le contenu de la résine synthétique dans une partie en contact avec la surface supérieure (3a, 103a) de la couche de revêtement (3, 103) de la cinquième couche d'encre (42, 142) est plus grand que le contenu de la résine synthétique dans une partie en contact avec la surface supérieure (3a, 103a) de la couche de revêtement (3, 103) de la quatrième couche d'encre (41, 141).

7. Article moulé décoré ou article forgé décoré (1) selon la revendication 2, dans lequel l'épaisseur moyenne de la couche d'encore imprimée (4, 104) comportant le pigment est supérieure à 1/10 de l'épaisseur moyenne d'une partie en contact avec la couche d'encre (4, 104) de la couche de revêtement (3, 103) .

8. Article moulé décoré ou article forgé décoré (1) selon l'une quelconque des revendications 1 à 7, dans lequel la couche d'encre imprimée (4, 104) comportant le pigment est formée par au moins l'une parmi une impression sérigraphique, une impression par tampographie, et une impression par jet d'encre.

9. Article moulé décoré ou article forgé décoré (1) selon l'une quelconque des revendications 1 à 8, dans lequel au moins une partie de la couche de revêtement (3, 103) formée par revêtement est formée par au moins l'un parmi un revêtement par électrodéposition, un revêtement en poudre et un revêtement électrostatique.

10. Article moulé décoré ou article forgé décoré (1) selon la revendication 9, dans lequel la surface supérieure formée par pulvérisation (3a, 103a) de la couche de revêtement (3, 103) est formée par un revêtement électrostatique.

11. Procédé de décoration d'un article moulé ou d'un article forgé (2), comprenant le fait de:
revêtir une surface supérieure métallique (2a) de l'article moulé ou forgé (2) d'une couche de revêtement (3, 103), et
imprimer directement une couche d'encre (4, 104) comportant un pigment sur la surface supérieure de la couche de revêtement (3, 103),
dans lequel au moins une surface supérieure (3a, 103a) de la couche de revêtement (3, 103) est formée par pulvérisation, et
dans lequel la couche d'encre (4, 104) est imprimée de sorte que la surface supérieure (3a, 103a) de la couche de revêtement (3, 103) soit plus grande en superficie que la surface supérieure (4a, 104a) de à couche d'encre (4), et que l'épaisseur d'au moins une partie de la couche d'encre (4, 104) soit inférieure à l'épaisseur maximale d'une partie en contact avec la couche d'encre (104) de la couche de revêtement (3, 103).

12. Procédé de décoration d'un article moulé ou d'un article forgé (2) selon la revendication 11, dans lequel la couche d'encre (4, 104) est imprimée de sorte que l'épaisseur de la couche d'encre (4, 104) soit inférieure à l'épaisseur maximale de la partie en contact avec la couche d'encre (4, 104) de la couche de revêtement (3, 103).

13. Procédé de décoration d'un article moulé ou d'un article forgé (2) selon la revendication 12, dans lequel l'impression directe d'une couche d'encre (4, 104) comprend au moins l'une parmi une impression sérigraphique, une impression par tampographie et une impression par jet d'encre.

14. Procédé de décoration d'un article moulé ou d'un article forgé (2) selon l'une quelconque des revendications 11 à 13, dans lequel le revêtement de la surface supérieure métallique (2a) de l'article moulé ou forgé (2) comprend le fait de former au moins une partie de la couche de revêtement par au moins l'un parmi un revêtement par électrodéposition, un revêtement en poudre et un revêtement électrostatique.

15. Procédé de décoration d'un article moulé ou d'un article forgé (2) selon l'une quelconque des revendications 11 à 14, dans lequel la pulvérisation pour former au moins la surface supérieure (3a, 103a) de la couche de revêtement (3, 103) comprend un revêtement électrostatique.
